# EUROPÄISCHE PATENTSCHRIFT

(11) **EP 0 939 255 B1**
(45) Veröffentlichungstag und Bekanntmachung des Hinweises auf die Patenterteilung: **04.08.2004**
(21) Anmeldenummer: 98123795.1
(22) Anmeldetag: 15.12.1998
(51) Int. Cl.: F16J 15/08

(54) **Zylinderkopfdichtung**
Cylinder head gasket
Joint de culasse

(30) Priorität: 28.02.1998 DE 19808544
(43) Veröffentlichungstag der Anmeldung: 01.09.1999
(73) Patentinhaber: ElringKlinger AG, 72581 Dettingen (DE)
(72) Erfinder: Diez, Armin, 73252 Lenningen (DE); Staib, Ulrich, 72622 Nürtingen (DE); Schweizer, Peter, 72664 Kohlberg (DE); Biedermann, Martin, 72581 Dettingen (DE)
(74) Vertreter: HOEGER, STELLRECHT & PARTNER Patentanwälte

(56) Entgegenhaltungen:
- EP-A- 0 717 218
- FR-A- 2 526 912
- US-A- 5 560 623
- US-A- 5 639 101

## Beschreibung

Die Erfindung betrifft eine sogenannte Metallagen-Zylinderkopfdichtung, deren Dichtungsplatte von mindestens drei Lagen gebildet wird, nämlich von zwei außenliegenden Metallagen (im folgenden Außenlagen genannt) und wenigstens einer zwischen diesen Außenlagen angeordneten Innenlage. Insbesondere betrifft die Erfindung derartige Zylinderkopfdichtungen für Nutzfahrzeugmotoren.

Die Dichtungsplatte einer solchen Zylinderkopfdichtung besitzt eine oder mehrere Brennraum-Durchgangsöffnungen sowie eine oder mehrere Flüssigkeitsdurchgangsöffnungen für den Durchgang von Schmieröl und/oder Kühlwasser und ist um die Brennraum-Durchgangsöffnung herum mit einem Brenngasabdichtsystem sowie um die Flüssigkeitsdurchgangsöffnung herum mit einem Flüssigkeitsabdichtsystem versehen. Bei gängigen Metallagen-Zylinderkopfdichtungen wird das Brenngasabdichtsystem gebildet von einer die Brennraum-Durchgangsöffnung umschließenden Vollsicke (d. h. einer Sicke mit ungefähr U-förmigem Querschnitt) einer Innenlage der Dichtungsplatte, den diese Sicke überdeckenden, um die Brennraum-Durchgangsöffnung herumlaufenden Randbereichen der beiden Außenlagen der Dichtungsplatte sowie einer Brennraumeinfassung; bei letzterer handelt es sich entweder um einen im Querschnitt ungefähr C-förmigen, um die Brennraum-Durchgangsöffnung herumlaufenden Metallblechstreifen, welcher die genannten Randbereiche der Außenlagen sowie die Sicke der Innenlage übergreift, oder um einen um die Brennraum-Durchgangsöffnung herumlaufenden freien Randstreifen der einen Außenlage, welcher um 180° so umgefalzt wurde, daß er den die Brennraum-Durchgangsöffnung umgebenden Randbereich der anderen Außenlage sowie die Sicke der Innenlage übergreift. Zur Bildung des Flüssigkeitsabdichtsystems sind bei den gängigen Metalllagen-Zylinderkopfdichtungen die Außenlagen mit die betreffende Flüssigkeitsdurchgangsöffnung umschließenden Sicken versehen, die sich einerseits (bei eingebauter Dichtung) gegen die benachbarte Dichtfläche des Zylinderkopfs bzw. Motorblocks und andererseits gegen eine Innenlage der Dichtungsplatte abstützen. Im Abstand von den Brennraum-Durchgangsöffnungen in den Außenlagen vorgesehene Sicken führen aber zu Nachteilen:

Im Motorbetrieb treten sogenannte vertikale Dichtspaltbewegungen auf, d. h. die Größe des die Zylinderkopfdichtung aufnehmenden Spalts zwischen den Dichtflächen von Zylinderkopf und Motorblock ist im Motorbetrieb keine konstante Größe, und diese vertikalen Dichtspaltbewegungen sind um so größer, je größer der Abstand der betrachteten Stelle des Dichtspalts von den Zylinderkopfschrauben ist. Dies gilt allerdings nicht für die an die Brennraum-Durchgangsöffnungen unmittelbar angrenzenden Bereiche der Dichtungsplatte, da Metallagen-Zylinderkopfdichtungen im Bereich der Brenngasabdichtsysteme so dimensioniert werden, daß dort auf alle Fälle die größten spezifischen Flächenpressungen auftreten, um zu verhindern, daß in diesen Bereichen im Motorbetrieb Undichtigkeiten zwischen der Zylinderkopfdichtung und dem Zylinderkopf bzw. dem Motorblock auftreten können. Eine Sicke, welche in einer Außenlage einer Metallagen-Zylinderkopfdichtung zur Abdichtung einer Flüssigkeitsdurchgangsöffnung verwendet wird und bei montierter Dichtung (d. h. wenn diese zwischen Zylinderkopf und Motorblock eingespannt ist) aufgrund ihres elastischen Rückfederungsvermögens flüssigkeitsdicht abdichten soll, führt jedoch dazu, daß vertikale Dichtspaltbewegungen horizontale Schiebebewegungen zwischen der Sicke und dem Zylinderkopf bzw. dem Motorblock zur Folge haben. Dies gilt auch für sogenannte Halbsicken (Sicken mit einem Querschnitt, welcher einem Z oder einem liegenden S ähnlich ist), welche bei Zylinderkopfdichtungen für moderne Motoren zur Abdichtung von Flüssigkeitsdurchgängen bevorzugt werden, da eine Halbsicke weniger Platz benötigt (in der Dichtungsplattenebene quer zur Längserstreckung der Sicke gemessen) als eine Vollsicke und in diesen Motoren zwischen den Durchgangsöffnungen häufig sehr wenig Platz zur Verfügung steht. Die Folge dieser horizontalen Schiebebewegungen sind Eingrabungen in den Dichtflächen von Zylinderkopf und Motorblock, und zwar selbst dann, wenn diese Motorbauteile nicht aus einer Leichtmetalllegierung, sondern aus Grauguß bestehen. In diesem Zusammenhang muß man sich vor Augen halten, daß die den Abdichteffekt bewirkenden Kontaktbereiche zwischen den Sicken und den Dichtflächen von Motorblock und Zylinderkopf eine nahezu linienförmige Gestalt haben und in diesen Kontaktbereichen verhältnismäßig hohe spezifische Flächenpressungen bestehen, welche beim Auftreten der vorstehend beschriebenen horizontalen Schiebebewegungen zu Verschleißerscheinungen an den Dichtflächen von Motorblock und Zylinderkopf führen, d. h. zu den erwähnten Eingrabungen. Derartige Eingrabungen haben aber nicht nur den Nachteil zur Folge, daß Undichtigkeiten auftreten können, weil sich in den genannten Kontaktbereichen im Motorbetrieb ein stationärer Zustand nicht erreichen läßt, sondern bei einem Austausch der Zylinderkopfdichtung müssen die Dichtflächen von Zylinderkopf und Motorblock auch immer bearbeitet werden, um diese Eingrabungen zu beseitigen und wieder absolut ebene Dichtflächen herzustellen.

Zu Unebenheiten, nämlich zu Eindrücken in den Dichtflächen von Zylinderkopf und Motorblock, welche bei einem Austausch der Zylinderkopfdichtung durch eine Bearbeitung der Dichtflächen beseitigt werden müssen, führen aber auch die im Querschnitt C-förmigen Brennraumeinfassungen der vorstehend beschriebenen bekannten Metallagen-Zylinderkopfdichtungen, da, wie bereits erwähnt, die spezifischen Flächenpressungen um die Brennraum-Durchgangsöffnungen der Zylinderkopfdichtungen herum besonders hoch sind.

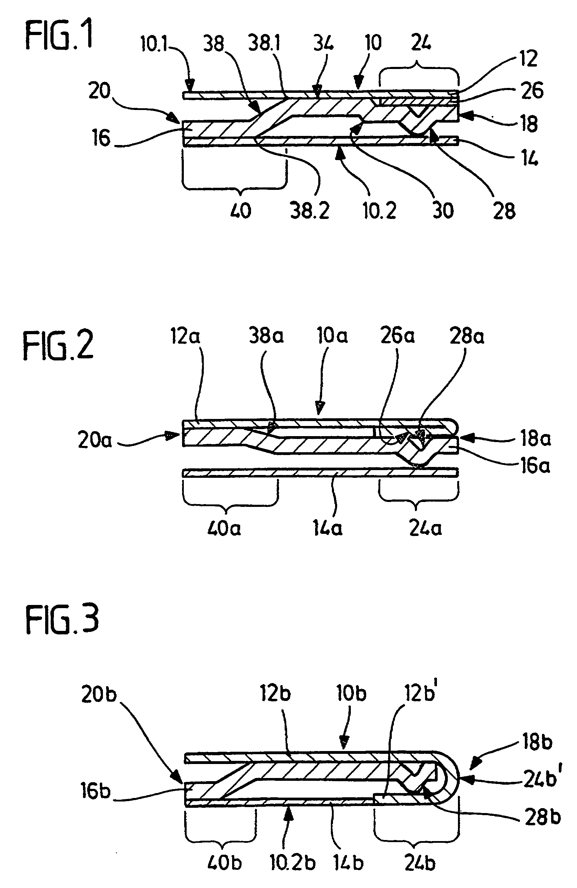

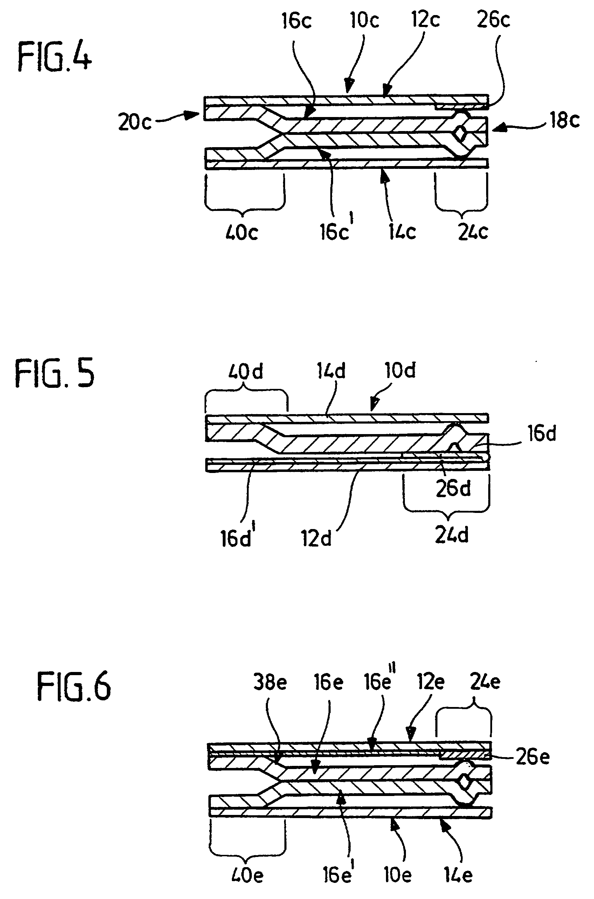

Aus der US-A-5 639 101, insbesondere deren Figuren 1 und 5A, ergibt sich eine Metallagen-Zylinderkopfdichtung, deren Dichtungsplatte im wesentlichen aus zwei glatten und ebenen Außenlagen und zwei zwischen diesen angeordneten Innenlagen besteht. Gemäß Fig. 1 werden Öl-Durchgangsöffnungen von jeweils einer Halbsicke umschlossen, während sämtliche Kühlmittel-Durchgangsöffnungen innerhalb einer einen in sich geschlossenen Linienzug bildenden Halbsicke liegen. Zur Abdichtung um die Brennraum-Durchgangsöffnungen herum sind gemäß Fig. 5A in jeder der beiden Innenlagen für jede Brennraum-Durchgangsöffnung eine die letztere umschließende Halbsicke sowie eine die Brennraum-Durchgangsöffnung und die Halbsicke umschließende Vollsicke vorgesehen, weich letztere also von der Brennraum-Durchgangsöffnung einen größeren radialen Abstand aufweist als die Halbsicke. Obwohl in der US-A-5 639 101 nicht offenbart, soll für das Folgende angenommen werden, daß die die Öl-Durchgangsöffnungen umschließenden Halbsicken gleichfalls in den Innenlagen ausgebildet sind, so wie dies in Fig. 5A für die sämtliche Kühlmittel-Durchgangsöffnungen umschließenden Halbsicken dargestellt ist. Für jede Brennraum-Durchgangsöffnung ist auf die Innenseite einer jeden Außenlage jeweils ein Blechring aufgeschweißt, welcher die Brennraum-Durchgangsöffnung umschließt und radial innerhalb des Kamms der benachbarten Halbsicke endet; für das Folgende sei angenommen, daß es sich bei diesen Blechringen um sogenannte Stopperringe handelt, welche die den Brennraum-Durchgangsöffnungen benachbarten und diese Öffnungen umschließenden Halbsicken bei eingebauter Dichtung im Motorbetrieb vor unzulässig hohen Verformungen, d. h. einer zu starken Abflachung, schützen sollen. Als für das Grundkonzept dieser bekannten Zylinderkopfdichtung wesentlich wird in der US-A-5 639 101 erwähnt, daß die den Brennraum-Durchgangsöffnungen zugeordneten Halbsicken radial innerhalb der benachbarten Volisicken und letztere radial außerhalb der Blechringe liegen.

Ausgehend von einer Zylinderkopfdichtung gemäß dem. Oberbegriff des Anspruchs 1, wie sie sich unter den vorstehend erwähnten Annahmen aus der US-A-5 639 101 ergibt, lag der Erfindung die Aufgabe zugrunde, eine für moderne Hochleistungsmotoren geeignete, im wesentlichen metallische Zylinderkopfdichtung zu schaffen, welche unmittelbar um die mindestens eine Brennraum-Durchgangsöffnung herum zuverlässig abdichtet und im Motorbetrieb dennoch nicht zu unerwünschten Veränderungen der Dichtfläche von Motorblock und/oder Zylinderkopf führt.

Diese Aufgabe wird durch den kennzeichnenden Teil des Anspruchs 1 gelöst, und im Hinblick auf die gestellte Aufgabe sei zu den Merkmalen des Anspruchs 1 folgendes bemerkt: Die eingangs geschilderten beengten Platzverhältnisse bei Zylinderkopfdichtungen für moderne Hochleistungsmotoren werden durch die in Fig. 1 der US-A-5 639 101 dargestellten Kühlmittel-Durchgangsöffnungen (7) illustriert; da, wie bereits erwähnt, eine Halbsicke weniger Platz benötigt als eine Vollsicke, ist es vorteilhaft, im Flüssigkeitsabdichtsystem eine Halbsicke vorzusehen. Die hohen, in den Brennräumen moderner Hochleistungsmotoren auftretenden Drücke lassen sich mit dem erfindungsgemäßen Brenngasabdichtsystem unmittelbar um eine Brennraum-Durchgangsöffnung herum viel besser beherrschen als mit der Zylinderkopfdichtung nach der US-A-5 639 101, weil in dem erfindungsgemäßen Brenngasabdichtsystem die der Brennraum-Durchgangsöffnung am nächsten liegende Sicke als Vollsicke ausgebildet und im Bereich des Kamms dieser Sicke für eine Pressungserhöhung gesorgt ist. Dennoch lassen sich mit der erfindungsgemäßen Zylinderkopfdichtung unerwünschte Veränderungen an der Dichtfläche des Motorblocks und/oder des Zylinderkopfs vermeiden, und zwar auch in den eine Brennraum-Durchgangsöffnung unmittelbar umgebenden Bereichen mit der erfindungsgemäß vorgesehenen Pressungserhöhung, weil die Außenlagen der Dichtungsplatte als glatte und ebene Blechlagen ausgebildet sind und die Sicken der Abdichtsysteme überdecken, und zwar auch die Vollsicke des Brenngasabdichtsystems, in deren Bereich die höchsten spezifischen Flächenpressungen zwischen der Zylinderkopfdichtung und den Dichtflächen von Motorblock und Zylinderkopf auftreten.

Besonders vorteilhafte Ausführungsformen der erfindungsgemäßen Zylinderkopfdichtung ergeben sich aus den Ansprüchen 2 bis 9.

Auch bei einer erfindungsgemäßen Zylinderkopfdichtung erfolgt um die Brennraum- sowie die Flüssigkeitsdurchgangsöffnung herum die gas- bzw. flüssigkeitsdichte Abdichtung nicht zwischen den Sicken und der Dichtfläche des Zylinderkopfs bzw. Motorblocks, sondern zwischen den Sicken und der benachbarten Metallage der Zylinderkopfdichtung, so daß die vorstehend beschriebenen, im Motorbetrieb auftretenden horizontalen Schiebebewegungen nicht zu einer Beeinträchtigung der Qualität der Dichtfläche von Zylinderkopf bzw. Motorblock führen können.

Da die Oberflächenrauhigkeit derjenigen Metallagen, gegen die sich die Sicken abstützen, im allgemeinen wesentlich geringer ist als die Oberflächenrauhigkeit der Dichtfläche von Zylinderkopf bzw. Motorblock, werden die Sicken durch die unvermeidbaren horizontalen Schiebebewegungen weit weniger beansprucht als bei den eingangs geschilderten bekannten Metallagen-Zylinderkopfdichtungen und sind infolgedessen weniger der Gefahr von Dauerbrüchen ausgesetzt. Mit Sicken versehene Metallagenbedingen die Verwendung bestimmter Werkstoffe für diese Metallagen; bei erfindungsgemäßen Zylinderkopfdichtungen liegen die mit Sicken versehenen Metallagen im Innern der Dichtungsplatte, weshalb die Erfindung zwischen den beiden Hauptoberflächen der Dichtung eine optimale Werkstoffpaarung unabhängig von den Werkstoffen des Zylinderkopfs und des Motorblocks ermöglicht.

Häufig ist es erforderlich, die beiden Hauptoberflächen einer Metallagen-Zylinderkopfdichtung mit einer Beschichtung zu versehen, durch die die Mikroabdichtung zwischen der Zylinderkopfdichtung und den Dichtflächen von Motorblock und Zylinderkopf verbessert wird - da es sich bei diesen beiden Motorbauteilen (und auch bei Laufbüchsen) um Gußteile handelt, lassen sich Poren oder gar Lunker in diesen Dichtflächen nicht völlig und mit absoluter Sicherheit vermeiden, und an diesen Fehlstellen der Dichtflächen läßt sich häufig eine Abdichtung nur mit derartigen Beschichtungen herbeiführen. Da die erfindungsgemäße Zylinderkopfdichtung für ihre Außenlagen völlig glatte Bleche verwendet, kann für die Außenlagen Bandmaterial verwendet werden, welches sich einfach und daher billig vollflächig mit einer Beschichtung versehen läßt, z. B. durch Aufwalzen einer dünnen Schicht aus elastomerem Material.

Im Motorbetrieb oder während der Lagerung von Metallagen-Zylinderkopfdichtungen an den beiden Hauptoberflächen der Dichtungsplatte auftretende Korrosionserscheinungen lassen sich durch die erwähnte Walzenbeschichtung einfach und besonders billig vermeiden - eine vollflächige Walzenbeschichtung ist viel billiger als eine partielle Beschichtung z. B. im Siebdruckverfahren oder eine vollflächige Beschichtung durch Aufsprühen oder Aufgießen des Beschichtungsmaterials, so wie dies bei mit Sicken versehenen Außenlagen erforderlich ist.

Schließlich ermöglichen es die glatten Außenlagen erfindungsgemäßer Zylinderkopfdichtungen, für diese Außenlagen im Vergleich zu Federstahl billige Werkstoffe zu verwenden.

Für die vorstehend aufgeführte Kombination von Merkmalen der erfindungsgemäßen Zylinderkopfdichtung gibt auch der weitere Stand der Technik kein Vorbild:

Aus der US-PS 4 759 556 ist zwar eine Metallagen-Zylinderkopfdichtung bekannt geworden (siehe dort die Figuren 4 und 5), bei der das Flüssigkeitsabdichtsystem um eine Öldurchgangsöffnung Hₒ herum gebildet wird von in diesem Bereich glatten und ebenen Außenlagen sowie einem Sickensystem 23, 24 einer Innenlage, jedoch läßt die Darstellung des eine Brennraum-Durchgangsöffnung H_{c} umgebenden Bereichs dieser Zylinderkopfdichtung in Fig. 4 der US-PS 4 759 556 erkennen, daß im Bereich des Brenngasabdichtsystems die beiden Hauptoberflächen der Dichtungsplatte nicht glatt und eben sind. Außerdem sind bei dieser bekannten Zylinderkopfdichtung die Sicken der Innenlage sämtlich als sogenannte Vollsicken ausgebildet, welche sich bezüglich der vorstehend erläuterten, auf horizontale Schiebebewegungen zurückzuführenden Problematik mit Halbsicken nicht vergleichen lassen: Halbsicken, welche aus Gründen des vorstehend erörterten Platzbedarfs den Vollsicken vorzuziehen sind, stützen sich beidseitig über einen jeweils einzigen, quasi linienförmigen Kontaktbereich gegen die benachbarte Metallage ab, so daß bei eingebauter Dichtung in beiden Kontaktbereichen ungefähr dieselbe spezifische Flächenpressung gegeben ist, während sich eine Vollsicke auf der einen Seite über einen und auf der anderen Seite über zwei quasi linienförmige Kontaktbereiche gegen die benachbarten Metallagen abstützt mit der Folge, daß längs dieser Kontaktbereiche auf der einen Seite die spezifische Fiächenpressung nur halb so groß ist wie auf der anderen Seite.

In diesem Zusammenhang sei darauf hingewiesen, daß die vorliegende Erfindung nicht auf Ausführungsformen beschränkt ist, bei denen eine Innenlage zur Bildung eines Flüssigkeitsabdichtsystems nur eine einzige, die Flüssigkeitsdurchgangsöffnung umschließende Halbsicke aufweist; diese Innenlage könnte beispielsweise auch zwei bezüglich der Flüssigkeitsdurchgangsöffnung konzentrische Halbsicken besitzen, für die insgesamt natürlich gleichfalls weniger Platz benötigt wird als für zwei Vollsicken. Aus den vorstehenden Erläuterungen ergibt sich auch, daß zwei nebeneinander und parallel zueinander verlaufende Halbsicken mit bezüglich einer zwischen diesen Halbsicken verlaufenden Mittellinie spiegelsymmetrischer Querschnittsgestaltung nicht mit einer Vollsicke gleichgesetzt werden dürfen, da zwei solche Halbsicken beiderseits der Innenlage zu je zwei quasi linienförmigen Kontaktbereichen führen, eine Vollsicke jedoch auf der einen Seite nur zu einem einzigen quasi linienförmigen Kontaktbereich.

Bei bevorzugten Ausführungsformen der erfindungsgemäßen Zylinderkopfdichtung stützt sich die Sicke einer Innenlage gegen die beiden Außenlagen ab oder - bei Verwendung zweier mit Sicken versehener Innenlagen - stützen sich die Sicken einerseits gegen eine benachbarte Außenlage und andererseits gegen eine benachbarte Innenlage ab. Grundsätzlich wäre es aber natürlich auch denkbar, zwischen einer Außenlage und einer mit einer Sicke versehenen Innenlage eine weitere Blechlage vorzusehen.

Gegebenenfalls kann es zweckmäßig sein, die Außenlagen an ihren Innenseiten mit einer Beschichtung zu versehen, insbesondere mit einer aufgewalzten vollflächigen Beschichtung, um an dieser Stelle bestimmte Oberflächeneigenschaften zu erzielen.

Aus Kostengründen, wie sich aus dem Folgenden noch ergeben wird aber auch aus Fertigungsgründen, kann es vorteilhaft sein, für mindestens eine der beiden Außenlagen einen Werkstoff zu verwenden, welcher eine geringere Härte aufweist als die mit der Sicke versehene Innenlage. So kann es sich insbesondere empfehlen, für wenigstens eine der Außenlagen ein verhältnismäßig weiches Kaltbandblech oder ein Blech aus einem austenitsicheren rostfreien Stahl zu verwenden, vor allem dann, wenn die betreffende Außenlage tiefziehfähig sein soll.

Zur Erzielung einer sogenannten Brennraumüberhöhung, d. h. einer besonders hohen spezifischen Flächenpressung um die Brennraum-Durchgangsöffnung herum, empfehlen sich zwei Konstruktionsprinzipien:

Für erste Ausführungsformen wird die Materialstärke der einen, ersten Außenlage größer gewählt als die Materialstärke der anderen, zweiten Außenlage und die Konstruktion so gestaltet, daß die erste Außenlage zur Bildung einer im Querschnitt ungefähr C-förmigen Einfassung der Brennraum-Durchgangsöffnung um letztere herum um 180° so umgefalzt ist, daß ein freier Randstreifen des umgefalzten Bereichs zumindest ungefähr in der Ebene der zweiten Außenlage liegt und die zum Brenngasabdichtsystem gehörende Sicke mindestens im wesentlichen überdeckt.

Alternativ kann die Dichtung so gestaltet werden, daß das Brenngasabdichtsystem einen dessen Sicke mindestens im wesentlichen überdeckenden und die Brennraum-Durchgangsöffnung umschließenden Blechring aufweist, welcher von einer der außenliegenden Metallagen getragen wird sowie deren Innenseite benachbart und parallel zu dieser verläuft. Bei diesem Blechring kann es sich um einen als separates Teil durch Stanzen hergestellten Blechring handeln, vorteilhafter sind jedoch Ausführungsformen, bei denen zur Bildung des Blechrings die diesem zugeordnete Außenlage um die Brennraum-Durchgangsöffnung herum um 180° auf sich selbst zurückgefaltet ist, denn dadurch läßt sich nicht nur Material einsparen, da der beim Ausstanzen eines Blechrings entstehende Abfall vermieden wird, sondern der Blechring wird auch ohne besondere Maßnahmen an der ihm benachbarten Außenlage in seiner Sollposition gehalten und er läßt sich beim Ausstanzen der Außenlage mittels eines Folgewerkzeugs in einfacher Weise erzeugen.

Bei erfindungsgemäßen Zylinderkopfdichtungen mit mehr als drei Metallagen muß der Blechring nicht von einer Außenlage getragen bzw. an diese angeformt sein, sondern er kann auch an einer der Innenlagen vorgesehen werden, wie sich aus den in der beigefügten Zeichnung dargestellten Ausführungsformen noch ergeben wird.

Weitere Merkmale, Vorteile und Einzelheiten der Erfindung ergeben sich aus der nachfolgenden Beschreibung sowie der beigefügten zeichnerischen Darstellung einiger besonders vorteilhafter Ausführungsformen der erfindungsgemäßen Zylinderkopfdichtung; die Figuren 1 bis 6 zeigen schematische Querschnitte durch sechs Ausführungsformen, wobei immer nur der Bereich zwischen einer Brennraum-Durchgangsöffnung und einer Flüssigkeitsdurchgangsöffnung dargestellt ist - in allen Figuren liegt die Brennraum-Durchgangsöffnung rechts und die Flüssigkeitsdurchgangsöffnung links von den gezeichneten Metallagenbereichen.

Da der Fachmann mit Metallagen-Zylinderkopfdichtungen wohl vertraut ist und derartige Zylinderkopfdichtungen auch in der Patentliteratur ausführlich beschrieben und zeichnerisch dargestellt wurden (außer in der vorstehend diskutierten US-PS 4 759 556 z. B. in der DE-A-23 43 311 sowie den europäischen Patentschriften 0 590 944, 0 518 665 und 0 518 664), sind die in den beigefügten Figuren 1 bis 6 gezeichneten Ausschnitte aus Schnitten durch erfindungsgemäße Zylinderkopfdichtungen für das Verständnis der vorliegenden Erfindung ausreichend.

Die Fig. 1 zeigt einen Teil einer Dichtungsplatte 10 einer erfindungsgemäßen Zylinderkopfdichtung mit zwei Außenlagen 12 und 14 sowie einer einzigen Innenlage 16. Eine Brennraum-Durchgangsöffnung wurde mit 18 bezeichnet, eine Flüssigkeitsdurchgangsöffnung mit 20, wobei nur die an den dargestellten Bereich der Dichtungsplatte 10 angrenzenden Bereiche dieser Durchgangsöffnungen erkennbar sind.

Die Außenlagen 12 und 14 sind erfindungsgemäß als glatte und ebene Blechlagen gestaltet, während es sich bei der Innenlage 16 um eine profilierte Blechlage handelt. Um die Brennraum-Durchgangsöffnung 18 herum weist diese Zylinderkopfdichtung ein Brenngasabdichtsystem 24 auf, welches die Brennraum-Durchgangsöffnung ringförmig umschließt; ein Bestandteil des Brenngasabdichtsystems 24 ist ein Blechring 26, bei dem es sich bei der in Fig. 1 dargestellten Ausführungsform um einen als separates Teil durch Ausstanzen hergestellten Blechring handeln soll, welcher die Brennraum-Durchgangsöffnung 18 gleichfalls ringförmig umschließt und an der Innenseite der Außenlage 12 in geeigneter Weise befestigt wurde, z. B. durch Punktschweißen mittels eines Lasers, wobei der Laserstrahl gemäß Fig. 1 von unten gegen den Blechring 26 gerichtet wurde.

Die Innenlage 16 hat eine die Brennraum-Durchgangsöffnung 18 umschließende, ringförmige Vollsicke 28 mit ungefähr U-förmigem Querschnitt, welche Bestandteil des Brenngasabdichtsystems 24 ist und vom Blechring 26 überdeckt wird. Bezüglich der Brennraum-Durchgangsöffnung 18 radial etwas außerhalb des Blechrings 26 ist die Innenlage 16 abgekröpft - die Abkröpfung wurde mit 30 bezeichnet -, wobei die Abkröpfung 30 in eine solche Richtung verläuft und die Dicke des Blechrings 26, die Höhe der Abkröpfung 30 und die Höhe der Vollsicke 28 so aufeinander abgestimmt sind, daß bei eingebauter Zylinderkopfdichtung ein mit 34 bezeichneter Oberflächenbereich der Innenlage 16 gegen die Außenlage 12 anliegt, wenn sich der Kamm der Vollsicke 28 gegen die Außenlage 14 abstützt und der Blechring 26 zu beiden Seiten der Sicke 28 gegen die Innenlage 16 anliegt.

Die Innenlage 16 hat eine die Flüssigkeitsdurchgangsöffnung 20 ringförmig umschließende Halbsicke 38, welche Bestandteil eines die Flüssigkeitsdurchgangsöffnung 20 ringförmig umschließenden Flüssigkeitsabdichtsystems 40 ist. Die Querschnittsform der Halbsicke 38 entspricht ungefähr einem Z, einem liegenden S oder einer abgeschrägten Stufe, und bei eingebauter Zylinderkopfdichtung stützt sich die Innenlage 16 im Bereich des Flüssigkeitsabdichtsystems 40 so an den beiden Außenlagen 12 und 14 ab, daß in quasi linienförmigen Kontaktbereichen 38.1 und 38.2, welche die Flüssigkeitsdurchgangsöffnung 20 ringförmig umfassen, verhältnismäßig hohe spezifische Flächenpressungen auftreten, welche höher sind als die spezifischen Flächenpressungen im Oberflächenbereich 34 und in dem sich an den Kontaktbereich 38.2 gemäß Fig. 1 nach links anschließenden Oberflächenbereich der Innenlage 16.

In dem in Fig. 1 dargestellten Bereich der Zylinderkopfdichtung erfolgt, wenn letztere zwischen Zylinderkopf und Motorblock eingespannt ist, die Abdichtung einerseits zwischen den Hauptoberflächen 10.1 und 10.2 der Dichtungsplatte 10 und den benachbarten Dichtflächen von Zylinderkopf und Motorblock (nicht dargestellt) und andererseits im Innern der Dichtungsplatte 10 um die Flüssigkeitsdurchgangsöffnung 20 herum zwischen den Außenlagen 12 und 14 sowie den Kontaktbereichen 38.1 und 38.2 der Innenlage 16 sowie um die Brennraum-Durchgangsöffnung 18 herum zwischen der Kuppe der Vollsicke 28 und der Außenlage 14 bzw. zwischen dem Blechring 26 und den beiden "Füßen" oder "Wurzeln" (die in Fig. 1 nach oben weisen) der Vollsicke 28. Wenn der Blechring 26 mit der Außenlage 12 nicht gasdicht verbunden ist, weil diese beiden Teile nicht mittels einer durchgehenden, ringförmigen und in sich geschlossenen, gasdichten Schweißnaht miteinander verbunden sind, erfolgt die Abdichtung um die Brennraum-Durchgangsöffnung 18 herum außerdem zwischen dem Blechring 26 und der Außenlage 12.

Die in den Figuren 2 bis 6 dargestellten Ausführungsformen werden im folgenden nur insoweit beschrieben, als sie von der Ausführungsform gemäß Fig. 1 abweichen, und in den Figuren 2 bis 6 wurden, soweit möglich, dieselben Bezugszeichen verwendet wie in Fig. 1, jedoch unter Hinzufügung der Buchstaben "a" bis "e".

Bei der in Fig. 2 dargestellten Ausführungsform ist die Abkröpfung 30 der Ausführungsform gemäß Fig. 1 entfallen, und an die Stelle des als separates Teil hergestellten Blechrings 26 trat ein an die Außenlage 12a angeformter Blechring 26a, der durch Umfalzen des Blechs der Außenlage 12a um die Brennraum-Durchgangsöffnung 18a herum erzeugt wurde.

Den Ausführungsformen nach den Figuren 1 und 2 ist jedoch gemeinsam, daß erfindungsgemäß der Blechring 26 bzw. 26a auf der Innenseite der benachbarten Außenlage 12 bzw. 12a liegt, damit die Hauptoberflächen der Dichtungsplatte 10 bzw. 10a auch um die Brennraum-Durchgangsöffnung herum eben und glatt sind.

Bei der Ausführungsform gemäß Fig. 2 ist die die Flüssigkeitsdurchgangsöffnung 20a umschließende Halbsicke 38a als von der Flüssigkeitsdurchgangsöffnung her betrachtet nach unten gerichtete Abkröpfung gestaltet, während bei der Ausführungsform nach Fig. 1 die Halbsicke 38 (im Querschnitt) schräg nach oben weist.

Die in Fig. 3 dargestellte Ausführungsform unterscheidet sich von den beiden zuvor beschriebenen Ausführungsformen im wesentlichen dadurch, daß zur Erzeugung einer sogenannten Brennraumüberhöhung, d. h. zur Pressungserhöhung im Bereich des Brenngasabdichtsystems, anstelle eines Blechrings Außenlagen unterschiedlicher Materialstärke verwendet wurden und die Außenlage größerer Materialstärke um die Brennraum-Durchgangsöffnung herum so umgefalzt wurde, daß sich eine im Querschnitt ungefähr C-förmige Brennraumeinfassung ergibt mit einem freien Randstreifen, welcher die gewünschte Pressungserhöhung bewirkt. Bei der in Fig. 3 dargestellten Ausführungsform hat die Außenlage 12b eine größere Materialstärke als die Außenlage 14b und ist um die Brennraum-Durchgangsöffnung 18b herum unter Bildung einer Brennraumeinfassung 24b' um 180° so umgefalzt, daß sie einen freien Randstreifen 12b' bildet, welcher Bestandteil des Brennraumabdichtsystems 24b ist und die Vollsicke 28b der Innenlage 16b überdeckt. Erfindungsgemäß überlappt der freie Randstreifen 12b' die andere Außenlage 14b jedoch nicht, so daß auch die gemäß Fig. 3 untere Hauptoberfläche 10.2b der Dichtungsplatte 10b in der Nachbarschaft der Brennraum-Durchgangsöffnung 18b eben ist.

Die in Fig. 4 dargestellte Ausführungsform unterscheidet sich von derjenigen gemäß Fig. 1 im wesentlichen nur dadurch, daß an die Stelle der Innenlage 16 der Ausführungsform nach Fig. 1 zwei mit Sicken versehene Innenlagen 16c und 16c' treten; diese beiden Innenlagen sind vorzugsweise bezüglich einer Mittelebene der Dichtungsplatte 10c spiegelsymmetrisch ausgebildet und angeordnet. Insbesondere verlaufen einander entsprechende Kontaktbereiche der Voll- und der Halbsicken so, daß sie in einer Draufsicht auf die Dichtungsplatte 10c deckungsgleich sind.

Die Ausführungsform nach Fig. 5 ist der Ausführungsform nach Fig. 2 weitgehend ähnlich, sie weist jedoch eine Metallage mehr auf als die Ausführungsform gemäß Fig. 2, und die sogenannte Brennraumüberhöhung wird durch einen umgefalzten Bereich einer zweiten Innenlage bewirkt. Bei der in Fig. 5 dargestellten Ausführungsform sind beide Außenlagen 12d und 14d glatte Blechlagen ohne umgefalzten Bereich, während eine zweite Innenlage 16d' mit einem umgefalzten Bereich einen Blechring 26d bildet, welcher Bestandteil des Brenngasabdichtsystems 24d ist; im übrigen ist die zweite Innenlage 16d' jedoch eine einfache, glatte und ebene Blechlage.

Die in Fig. 6 dargestellte Ausführungsform ist bis auf eine zusätzliche Innenlage mit der in Fig. 4 gezeigten Ausführungsform identisch; bei dieser zusätzlichen, dritten Innenlage handelt es sich um eine glatte, ebene Innenlage 16e", welche sich vorzugsweise nicht in das Brenngasabdichtsystem 24e hineinerstreckt, gegen die sich jedoch die Halbsicke 38e der Innenlage 16e abstützt.

Wie sich aus den zeichnerisch dargestellten Ausführungsformen ergibt, ist es besonders vorteilhaft, die Halbsicken der Flüssigkeitsabdichtsysteme an denselben Innenlagen vorzusehen wie die Sicken der Brenngasabdichtsysteme, um für möglichst viele Metallagen der Dichtungsplatte glatte Bleche verwenden zu können. Grundsätzlich wäre es aber natürlich auch möglich, die Halbsicken der Flüssigkeitsabdichtsysteme an einer anderen Innenlage vorzusehen als die Sicken der Brenngasabdichtsysteme.

## Patentansprüche

1. Zylinderkopfdichtung mit einer mehrere aufeinandergeschichtete Metallage (12, 16, 14) aufweisenden Dichtungsplatte (10), welche mindestens eine Brennraum-Durchgangsöffnung (18) sowie mindestens eine Flüssigkeitsdurchgangsöffnung (20) besitzt und um die Brennraum-Durchgangsöffnung herum mit einem Brenngasabdichtsystem (24) sowie um die Flüssigkeitsdurchgangsöffnung herum mit einem Flüssigkeitsabdichtsystem (40) versehen ist, wobei zwei außenliegende Metallagen (Außenlagen) (12, 14) der Dichtungsplatte mindestens eine innere Metallage (Innenlage) (16) der Dichtungsplatte zwischen sich einschließen, welche als Bestandteil des Brenngasabdichtsystems (24) eine die Brennraum-Durchgangsöffnung (18) umschließende erste Sicke (28) sowie als Bestandteil des Flüssigkeitsabdichtsystems (40) eine die Flüssigkeitsdurchgangsöffnung (20) umschließende und dieser benachbarte zweite Sicke (38) aufweist, wobei die erste Sicke eine Vollsicke (28) mit ungefähr U-förmigem Querschnitt und die zweite Sicke eine Halbsicke(38) mit ungefähr Z-förmigem Querschnitt ist und sich diese Sicken (28, 38) bei eingebauter Dichtung gegen zwei der Innenlage (16) benachbarte Metallagen (12, 14) der Dichtungsplatte (10) abstützen, die Außenlagen (12, 14) über die gesamten beiden Hauptoberflächen (10.1, 10.2) der Dichtungsplatte (10) als glatte und ebene Blechlagen ausgebildet sind und diese Hauptoberflächen bilden sowie die erste und die zweite Sicke (28, 38) überdecken, und wobei die Innenlage (16) eine solche Federstahlblechlage ist, daß die Sicken (28, 38) bei eingebauter Dichtung überwiegend im elastischen Bereich beansprucht werden,
**dadurch gekennzeichnet, daß**
(a) die Vollsicke (28) der Brennraum-Durchgangsöffnung (18) näher benachbart ist als die Halbsicke (38), und
(b) zur Pressungserhöhung im Bereich des Brenngasabdichtsystems (24) die Summe der Materialstärken der Metallagen (12, 26, 16, 14) der Dichtungsplatte (10) um die Brennraum-Durchgangsöffnung (18) herum in einem die Vollsicke (28) einschließlich ihres Kamms enthaltenden Bereich des Brenngasabdichtsystems größer ist als in an letzteres angrenzenden Bereichen der Dichtungsplatte (10).

2. Zylinderkopfdichtung nach Anspruch 1, **dadurch gekennzeichnet, daß** sich die Halbsicke (38) der Innenlage (16) gegen wenigstens eine der beiden Außenlagen (12, 14) abstützt.

3. Zylinderkopfdichtung nach Anspruch 1 oder 2, **dadurch gekennzeichnet, daß** die beiden Außenlagen (12, 14) an mindestens einer ihrer Seiten und insbesondere an ihren die Hauptoberflächen (10.1, 10.2) der Dichtungsplatte (10) bildenden Außenseiten vollflächig mit einer Beschichtung versehen sind.

4. Zylinderkopfdichtung nach Anspruch 3, **dadurch gekennzeichnet, daß** die beiden Außenlagen (12, 14) beidseitig vollflächig mit einer Beschichtung versehen sind.

5. Zylinderkopfdichtung nach einem oder mehreren der vorstehenden Ansprüche, **dadurch gekennzeichnet, daß** mindestens eine der beiden Außenlagen (12, 14) eine geringere Härte aufweist als die mit den Sicken (28, 38) versehene Innenlage (16).

6. Zylinderkopfdichtung nach einem oder mehreren der vorstehenden Ansprüche, **dadurch gekennzeichnet, daß** die Materialstärke der einen, ersten Außenlage (12b) größer ist als diejenige der anderen, zweiten Außenlage (14b) und daß die erste Außenlage (12b) zur Bildung einer im Querschnitt ungefähr C-förmigen Einfassung (24b') der Brennraum-Durchgangsöffnung (18b) um letztere herum um 180° so umgefalzt ist, daß ein freier Randstreifen (12b') des umgefalzten Bereichs zumindest ungefähr in der Ebene der zweiten Außenlage (14b) liegt und die zum Brenngasabdichtsystem (24b) gehörende Sicke (28b) mindestens im wesentlichen überdeckt.

7. Zylinderkopfdichtung nach einem oder mehreren der Ansprüche 1 bis 5, **dadurch gekennzeichnet, daß** das Brenngasabdichtsystem (24) einen dessen Sicke (28) mindestens im wesentlichen überdeckenden und die Brennraum-Durchgangsöffnung (18) umschließenden Blechring (26) aufweist, welcher von einer der Metallagen (12, 14) getragen wird.

8. Zylinderkopfdichtung nach Anspruch 7, **dadurch gekennzeichnet, daß** der Blechring (26) von einer der Außenlagen (12, 14) getragen wird sowie deren Innenseite benachbart und parallel zu dieser verläuft.

9. Zylinderkopfdichtung nach Anspruch 7 oder 8, **dadurch gekennzeichnet, daß** zur Bildung des Blechrings (26a) die diesem zugeordnete Metällage (12a) um die Brennraum-Durchgangsöffnung (18a) herum um 180° auf sich selbst zurückgefaltet ist.

## Claims

1. Cylinder head gasket with a gasket plate (10) having several metal layers (12, 14, 16) placed on top of one another, said gasket plate having at least one combustion chamber aperture (18) as well as at least one fluid aperture (20) and being provided with a combustion gas sealing system (24) around the combustion chamber aperture as well as with a fluid sealing system (40) around the fluid aperture, wherein two external metal layers (outer layers) (12, 14) of the gasket plate enclose between them at least one inner metal layer (inner layer) (16) of the gasket plate, said inner layer having a first bead (28) surrounding the combustion chamber aperture (18) as part of the combustion gas sealing system (24) as well as a second bead (38) adjacent to and surrounding the fluid aperture (20) as part of the fluid sealing system (40), wherein the first bead is a full bead (28) with an approximately U-shaped cross section and the second bead is a semi-bead (38) with an approximately Z-shaped cross section and these beads (28, 38) are supported against two metal layers (12, 14) of the gasket plate (10) adjacent to the inner layer (16) when the gasket is fitted, the outer layers (12, 14) are designed as smooth and flat sheet metal layers over the entire two main surfaces (10.1, 10.2) of the gasket plate (10) and form these main surfaces as well as cover the first and the second beads (28, 38), and wherein the inner layer (16) is such a spring-steel sheet metal layer that the beads (28, 38) are stressed predominantly in the elastic range when the gasket is fitted,
**characterized in that**
(a) the full bead (28) is more closely adjacent to the combustion chamber aperture (18) than the semi-bead (38), and
(b) in order to increase sealing pressure in the area of the combustion gas sealing system (24) the sum of the material thicknesses of the metal layers (12, 26, 16, 14) of the gasket plate (10) around the combustion chamber aperture (18) is greater in an area of the combustion gas sealing system comprising the full bead (28) including its crest than in areas of the gasket plate (10) bordering on said combustion gas sealing system.

2. Cylinder head gasket as defined in claim 1, **characterized in that** the semi-bead (38) of the inner layer (16) is supported against at least one of the two outer layers (12, 14).

3. Cylinder head gasket as defined in claim 1 or 2, **characterized in that** the two outer layers (12, 14) are provided with a coating over the entire surface on at least one of their sides and, in particular, on their outer sides forming the main surfaces (10.1, 10.2) of the gasket plate (10).

4. Cylinder head gasket as defined in claim 3, **characterized in that** the two outer layers (12, 14) are provided with a coating on both sides over the entire surface.

5. Cylinder head gasket as defined in any one or several of the preceding claims, **characterized in that** at least one of the two outer layers (12, 14) has a lesser hardness than the inner layer (16) provided with the beads (28, 38).

6. Cylinder head gasket as defined in any one or several of the preceding claims, **characterized in that** the material thickness of the one, first outer layer (12b) is greater than that of the other, second outer layer (14b) and that in order to form a border (24b') of the combustion chamber aperture (18b) approximately C-shaped in cross section the first outer layer (12b) is folded through 180° around the combustion chamber aperture such that a free edge strip (12b') of the folded region is located at least approximately in the plane of the second outer layer (14b) and covers the bead (28b) belonging to the combustion gas sealing system (24b) at least substantially.

7. Cylinder head gasket as defined in any one or several of claims 1 to 5, **characterized in that** the combustion gas sealing system (24) has a sheet-metal ring (26) covering its bead (28) at least substantially and surrounding the combustion chamber aperture (18), said ring being borne by one of the metal layers (12, 14).

8. Cylinder head gasket as defined in claim 7, **characterized in that** the sheet-metal ring (26) is borne by one of the outer layers (12, 14) and extends adjacent to its inner side as well as parallel thereto.

9. Cylinder head gasket as defined in claim 7 or 8, **characterized in that** for forming the sheet-metal ring (26a) the metal layer (12a) associated with it is folded back upon itself through 180° around the combustion chamber aperture (18a).

## Revendications

1. Joint de culasse comprenant une plaque d'étanchéité (10) qui présente plusieurs couches métalliques (12, 16, 14) mutuellement superposées, possède au moins une ouverture de passage de chambre de combustion (18) ainsi qu'au moins une ouverture de passage de liquide (20), et est pourvue tout autour de l'ouverture de passage de chambre de combustion, d'un système d'étanchéité aux gaz de combustion (24) ainsi que tout autour de l'ouverture de passage de liquide, d'un système d'étanchéité au liquide (40), deux couches métalliques situées à l'extérieur (couches extérieures) (12, 14) de la plaque d'étanchéité enserrant entre elles, en tant que constituant de la plaque d'étanchéité, au moins une couche métallique intérieure (couche intérieure) (16) qui présente, en tant que partie constitutive du système d'étanchéité aux gaz de combustion (24), une première moulure (28) entourant l'ouverture de passage de chambre de combustion (18), ainsi que, en tant que partie constitutive du système d'étanchéité au liquide (40), une seconde moulure (38) entourant l'ouverture de passage de liquide (20) et voisine de celle-ci, la première moulure étant une moulure complète (28) avec une section transversale approximativement en forme de U, et la seconde moulure une demi-moulure (38) avec une section transversale approximativement en forme de Z, et ces moulures (28, 38), pour un joint de culasse implanté, s'appuyant contre deux couches métalliques (12, 14) de la plaque d'étanchéité (10), qui sont voisines de la couche intérieure (16), et les couches extérieures (12, 14) étant réalisées sous la forme de couches de tôle lisses qui s'étendent sur la totalité des deux surfaces principales (10.1, 10.2) de la plaque d'étanchéité (10) et forment ces surfaces principales et recouvrent la première et la seconde moulure (28, 38), et la couche intérieure (16) étant une couche de tôle d'acier à ressort telle, que les moulures (28, 38), lorsque le joint est implanté, soient sollicitées essentiellement dans le domaine élastique,
**caractérisé**
a) en ce que la moulure pleine (28) est plus proche de l'ouverture de passage de chambre de combustion (18) que la demi-moulure (38), et
b) en ce qu'en vue d'augmenter la pression d'application dans la zone du système d'étanchéité aux gaz de combustion (24), la somme des épaisseurs de matériau des couches métalliques (12, 26, 16, 14) de la plaque d'étanchéité (10) autour de l'ouverture de passage de chambre de combustion (18), dans une zone du système d'étanchéité aux gaz de combustion englobant la moulure pleine (28), y compris sa crête, est plus grande que dans des zones de la plaque d'étanchéité (10), qui sont adjacentes à ladite zone précédente.

2. Joint de culasse selon la revendication 1, **caractérisé en ce que** la demi-moulure (38) de la couche intérieure (16) s'appuie sur l'une au moins des deux couches extérieures (12, 14).

3. Joint de culasse selon la revendication 1 ou 2, **caractérisé en ce que** les deux couches extérieures (12, 14) sont pourvues, sur au moins un de leurs côtés, et notamment sur leurs côtés extérieurs formant les surfaces principales (10.1, 10.2) de la plaque d'étanchéité (10), d'un revêtement sur la totalité de la surface.

4. Joint de culasse selon la revendication 3, **caractérisé en ce que** les deux couches extérieures (12, 14) sont pourvues d'un revêtement des deux côtés, sur la totalité de leur surface.

5. Joint de culasse selon l'une ou plusieurs des revendications précédentes, **caractérisé en ce que** l'une au moins des deux couches extérieures (12, 14) présente une dureté moindre que la couche intérieure (16) pourvue des moulures (28, 38).

6. Joint de culasse selon l'une ou plusieurs des revendications précédentes, **caractérisé en ce que** l'épaisseur de matériau de la première couche extérieure (12b) est supérieure à celle de l'autre, à savoir la seconde couche extérieure (14b), et **en ce que** la première couche extérieure (12b), en vue de former un bordage (24b') approximativement en forme de C en section transversale, autour de l'ouverture de passage de chambre de combustion (18b), est repliée autour de cette dernière de 180° de façon telle, qu'une bande de bordure libre (12b') de la zone repliée se situe au moins approximativement dans le plan de la seconde couche extérieure (14b) et recouvre au moins sensiblement la moulure (28b) faisant partie du système d'étanchéité aux gaz de combustion (24b).

7. Joint de culasse selon l'une ou plusieurs des revendications 1 à 5, **caractérisé en ce que** le système d'étanchéité aux gaz de combustion (24) comprend un anneau de tôle (26) qui au moins recouvre sensiblement la moulure (28) dudit système d'étanchéité et entoure l'ouverture de passage de chambre de combustion (18), et est porté par l'une des couches métalliques (12, 14).

8. Joint de culasse selon la revendication 7, **caractérisé en ce que** l'anneau de tôle (26) est porté par l'une des couches extérieures (12, 14) et s'étend au voisinage de son côté intérieur et parallèlement à celui-ci.

9. Joint de culasse selon la revendication 7 ou 8, **caractérisé en ce que** pour former l'anneau de tôle (26a), la couche métallique (12a) qui lui est associée, est repliée de 180° sur elle-même autour de l'ouverture de passage de chambre de combustion (18a).
